# FASCICULE DE BREVET EUROPEEN

(11) **EP 3 975 789 B1**
(45) Date de publication et mention de la délivrance du brevet: **13.08.2025**
(21) Numéro de dépôt: 20740370.0
(22) Date de dépôt: 02.06.2020
(51) Int. Cl.: A43D 999/00, G01N 3/56

(54) **SIMULATEUR MÉCANIQUE DE MARCHE ET DE COURSE**
MECHANISCHER GEH- UND LAUFSIMULATOR
MECHANICAL WALKING AND RUNNING SIMULATOR

(30) Priorité: 03.06.2019 FR 1905853
(43) Date de publication de la demande: 06.04.2022
(73) Titulaire: CTC, 69007 Lyon (FR)
(72) Inventeur: VIGIER, Cédric, 69250 Montanay (FR); CHAUVIN, Jean-Francois, 38410 Saint Martin d'Uriage (FR); POLOME, Elliot, 20169 BONIFACIO (FR); THEVENIAU, Nicolas, 69530 BRIGNAIS (FR); LOUIS, Valantin, 69100 VILLEURBANNE (FR)
(74) Mandataire: Germain Maureau
(86) Numéro de dépôt international: PCT/FR2020/050938
(87) Numéro de publication internationale: WO 2020/245536

(56) Documents cités:
- EP-A1- 2 578 102
- KR-B1- 101 763 832
- US-A- 2 638 776
- US-A- 4 130 007

## Description

La présente invention se rapporte à un simulateur mécanique de marche et/ou de course à pied.

Elle concerne également un procédé de simulation de marche ou de course par le pilotage d'un tel simulateur.

Dans les domaines de la conception et de la fabrication de chaussures, il est souvent nécessaire de réaliser des tests d'usure « au porté » d'une paire de chaussures par un utilisateur humain.

En effet, ces tests permettent d'observer l'usure des chaussures au fur et à mesure de leur utilisation et d'identifier par exemple les zones de celles-ci qui sont soumises aux efforts mécaniques les plus importants, notamment dus au frottement des chaussures contre le sol et à la déformation du pied pendant la marche ou la course, et qui sont ainsi susceptibles d'être le plus rapidement dégradées.

Grâce à ces observations, il est ensuite possible de sélectionner et concevoir des paires de chaussures présentant des géométries ou des matériaux particuliers, résistant mieux à l'usure et aux détériorations observées.

Plusieurs méthodes existent pour réaliser de tels tests d'utilisation prolongée.

Il est par exemple possible de faire porter une paire de chaussures à tester à un utilisateur humain réel pendant une longue période : cette méthode permet d'obtenir des résultats fiables (les chaussures ayant subi une utilisation réelle et ayant été effectivement soumises à des efforts mécaniques prolongés), mais présente les inconvénients de nécessiter une durée d'étude très importante et un nombre conséquent de testeurs humains disponibles.

Il est également connu d'utiliser des simulateurs de marche, permettant de simuler le mouvement d'un ou plusieurs pieds humains pendant un cycle de marche ou de course : ces simulateurs permettent ainsi de soumettre une paire de chaussures à des efforts mécaniques similaires à ceux qu'elle subirait si elle était portée par un utilisateur humain réel.

Grâce à ces simulateurs il est ainsi possible de soumettre des chaussures à un grand nombre de cycles de marche en un temps limité, simulant en quelques jours l'usure que celles-ci présenteraient si elles avaient été portées par un utilisateur réel pendant plusieurs mois.

Par exemple, le document CN205093682U décrit un simulateur de marche permettant de reproduire le mouvement d'une chaussure pendant un cycle de marche, en déplaçant celle-ci grâce à un bras articulé par rapport à un plateau repréentant le sol. Cependant, le mouvement suivi par la chaussure dans ce simulateur est très rudimentaire et ne permet d'imiter que très grossièrement un cycle de marche humain. L'usure subie par la chaussure à l'issue des tests ne sera donc pas représentative de l'usure réelle que celle-ci aurait subi si elle avait été portée par un utilisateur humain : les résultats que permettent d'obtenir ce simulateur sont donc peu fiables et donc difficilement exploitables.

Le document US 4130007 A décrit aussi un simulateur de marche permettant de simuler un cycle de marche.

De plus, les simulateurs mécaniques existants ne permettent pas de simuler un cycle de marche rapide ou de course nécessitant de reproduire des mouvements rapides et de forte amplitude : il est donc, par exemple, impossible de reproduire fidèlement grâce à ces simulateurs l'usure subie par une paire de chaussures de sport, habituellement portée pour courir.

La présente invention a ainsi pour but de résoudre les inconvénients précités, en proposant un simulateur de marche permettant de reproduire fidèlement un cycle de marche humain.

Un autre objectif de l'invention est de proposer un simulateur de marche qui permette de reproduire plusieurs cycles de marche différents en faisant varier la vitesse de marche, le type d'attaque et de pose du pied ou encore la nature du sol.

Encore un autre objectif de l'invention est de proposer un simulateur de marche qui permette de reproduire un cycle de course ou de marche à vitesse rapide.

A cet effet, elle propose un simulateur de marche, comportant :
- un pied mécanique articulé,
- un premier système de déplacement adapté pour déplacer ledit pied mécanique articulé selon un mouvement combinant un mouvement de translation selon une direction horizontale et un mouvement de rotation autour d'une direction transversale, orthogonale à ladite direction horizontale,
- une plateforme présentant une surface supérieure adaptée pour rentrer en contact avec le pied mécanique articulé,
- un deuxième système de déplacement, adapté pour déplacer ladite plateforme en translation selon une direction verticale, orthogonale à la direction horizontale et à la direction transversale,
le premier système de déplacement et le deuxième système de déplacement étant conçus pour être pilotés de manière indépendante ou interpolée, de sorte que le mouvement du pied mécanique articulé par rapport à la plateforme soit similaire à celui d'un pied humain par rapport au sol pendant un cycle de marche ou de course.

Un tel simulateur de marche permet de reproduire efficacement un mouvement de marche humaine, grâce au pilotage conjoint du premier système de déplacement et du deuxième système de déplacement.

En effet, le premier système de déplacement permet d'entraîner le pied mécanique articulé dans un mouvement simulant le mouvement d'une jambe humaine pendant la phase d'un cycle de marche durant laquelle le pied n'est pas en contact avec le sol (« phase oscillante ») : pendant la reproduction de cette phase oscillante par le simulateur, le pied mécanique articulé n'est pas en contact avec la surface supérieure de la plateforme.

Durant cette phase oscillante, le pied mécanique articulé suit un mouvement obtenu par la combinaison d'un mouvement de translation selon la direction horizontale et un mouvement de rotation autour de la direction transversale.

En pilotant le deuxième système de déplacement de manière coordonnée avec le pilotage du premier système de déplacement, entraînant la plateforme dans un mouvement de translation selon la direction verticale, il est possible de simuler la phase du cycle de marche pendant laquelle le pied est en contact avec le sol (« phase d'appui ») : durant cette phase d'appui, le pied mécanique articulé est en contact avec la surface supérieure de la plateforme.

La mise en contact de la plateforme avec le pied mécanique articulé permet de modifier le mouvement imposé à ce dernier par le premier système de déplacement, le deuxième système de déplacement entraînant également le pied mécanique articulé dans un mouvement de translation selon la direction verticale.

Le pilotage coordonné du premier système de déplacement et du deuxième système de déplacement permet donc d'entraîner le pied mécanique articulé dans un mouvement comportant au moins trois degrés de liberté indépendants et d'ainsi reproduire le mouvement complexe d'un pied humain pendant un cycle de marche.

Il est à noter que le mouvement simulant le cycle de marche est le mouvement du pied mécanique articulé par rapport à la plateforme.

La qualité de la simulation du cycle de marche grâce au simulateur de marche selon l'invention dépend ainsi du pilotage conjoint du premier système de déplacement et du deuxième système de déplacement : afin de s'assurer que le mouvement du pied mécanique articulé reproduise bien le mouvement d'un pied pendant un cycle de marche ou de course, il est possible de baser le paramétrage du premier système de déplacement et du deuxième système de déplacement sur un ensemble de données expérimentales permettant de décrire la cinématique du mouvement d'un pied humain pendant la marche ou la course ainsi que ses paramètres dynamiques.

Cet ensemble de données peut, par exemple, être obtenu à l'issue d'observations du cycle de marche ou de course de sujets humains réels et comporter des données de position, de vitesse, d'accélération, de forces, de pression, etc.

Le paramétrage du premier système de déplacement et du deuxième système de déplacement peut ainsi être réalisé de manière que le mouvement du pied mécanique articulé soit décrit par le même ensemble de données expérimentales : en d'autres termes, si l'on venait à effectuer, pendant un cycle de marche ainsi simulé par le simulateur de marche, les mêmes mesures que celles ayant été effectuées pendant un cycle de marche réel, l'ensemble de ces données mesurées serait alors identique à l'ensemble des données expérimentales ayant servi à paramétrer le premier système de déplacement et le deuxième système de déplacement.

Selon une possibilité, le pied mécanique articulé est adapté pour qu'il puisse être « chaussé » d'une chaussure à tester : à l'issue de plusieurs cycles de marche, il est ainsi possible d'observer l'état d'usure de cette chaussure, par exemple les pertes de matière au niveau de sa semelle ou ses déformations latérales, cet état d'usure étant alors représentatif de l'état d'usure résultant d'une utilisation prolongée de cette chaussure par un utilisateur humain réel.

Selon l'invention, le premier système de déplacement comporte une pièce intermédiaire présentant :
- une première extrémité fixée au pied mécanique articulé et
- une deuxième extrémité fixée à un chariot, déplaçable selon la direction horizontale, par l'intermédiaire d'une liaison pivot selon la direction transversale.

Cette pièce intermédiaire simule ainsi le rôle d'un tibia humain et ce chariot celui de l'extrémité d'un fémur humain, la liaison pivot reliant la pièce intermédiaire au chariot simulant alors l'articulation d'un genou humain.

Le chariot est déplaçable selon la direction horizontale, par exemple le long de guides disposés selon cette même direction horizontale, et la position du chariot reproduit donc la position d'un genou humain pendant le cycle de marche.

Or, dans un cycle de marche réel le déplacement du genou ne suit pas un pur mouvement de translation rectiligne : c'est ainsi le mouvement du chariot par rapport à la plateforme (elle-même étant déplaçable selon la direction verticale) qui reproduit le mouvement d'un genou humain.

Selon l'invention, le premier système de déplacement comporte un système bielle/manivelle conçu pour déplacer le chariot selon la direction horizontale, la manivelle étant déplaçable en rotation autour de la direction transversale.

Cette caractéristique, en plus de présenter des avantages en terme de simplicité de réalisation, présente une grande robustesse et permet d'imposer au chariot des mouvements de grande amplitude et à grande vitesse, inaccessibles aux autres simulateurs de marche de l'état de la technique sans risque important de dégradation. En particulier, il est ainsi possible de simuler grâce au simulateur de marche selon l'invention des cycles de course ou de marche rapide, inaccessibles aux simulateurs de marche de l'état de la technique.

La position du chariot selon la direction horizontale est alors déterminée par le mouvement de rotation de la manivelle.

Selon l'invention, le premier système de déplacement comporte :
- un motoréducteur conçu pour entraîner la pièce intermédiaire dans un mouvement de rotation autour de la direction transversale, et
- un moteur conçu pour entraîner la manivelle dans un mouvement de rotation autour de la direction transversale,
ce moteur et ce motoréducteur pouvant être pilotés indépendamment l'un de l'autre. Le pilotage de ces deux moteurs permet ainsi de commander la position du chariot selon la direction horizontale et l'inclinaison de la pièce intermédiaire par rapport à la direction verticale, c'est-à-dire de simuler la position du genou et celle du tibia pendant le cycle de marche.

Le moteur entraînant le système bielle/manivelle pourra avantageusement être de type « brushless » et présenter une vitesse de rotation fixe réglable.

Selon une possibilité, la manivelle comporte une ou plusieurs masses d'équilibrage permettant d'atténuer les vibrations mécaniques induites par la mise en mouvement de celle-ci.

Avantageusement, la bielle est fixée sur la manivelle à une distance ajustable de l'axe de rotation de cette dernière.

De la sorte, il est possible de modifier le déplacement du chariot selon la direction horizontale, sans modifier les caractéristiques du mouvement de rotation de la manivelle autour de la direction transversale.

Dans un mode de réalisation, le pied mécanique articulé comporte un corps central fixé à la première extrémité de la pièce intermédiaire par l'intermédiaire d'une liaison mécanique autorisant un mouvement de rotation, autour de la direction transversale, dudit corps central par rapport à ladite première extrémité, de manière à simuler l'articulation d'une cheville d'un pied humain.

Selon une caractéristique le pied mécanique articulé comporte une partie avant fixée au corps central par l'intermédiaire d'une liaison mécanique autorisant un mouvement de rotation, autour de la direction transversale, de ladite partie avant par rapport audit corps central, de manière à simuler les articulations métatarso-phalangiennes d'un pied humain.

Cette structure du pied mécanique articulé, basée sur un modèle anatomique d'un pied humain réel et présentant deux articulations supplémentaires, permet de simuler de manière encore plus fidèle un cycle de marche ou de course, en prenant en compte les déformations subies par un pied humain au cours de celui-ci, notamment au cours de la phase d'appui.

Grâce à ces articulations, le pied mécanique articulé est déformé lorsque celui-ci rentre en contact avec la plateforme et est entraîné en rotation par rapport à la pièce intermédiaire.

Par exemple, il est envisageable que les liaisons mécaniques reliant respectivement le corps central à la partie avant du pied mécanique articulé et à la première extrémité de la pièce intermédiaire soient des liaisons pivot selon la direction transversale.

Le mouvement du pied mécanique articulé comporte ainsi cinq degrés de liberté (translation du chariot, rotation de la pièce intermédiaire, translation de la plateforme, rotation du corps central et rotation de la partie avant) : c'est grâce à ce nombre élevé de degrés de liberté que le simulateur selon l'invention permet un meilleure reproduction d'un cycle de marche.

Il est envisageable de piloter les mouvements relatifs du corps central, de la partie avant et de la pièce intermédiaire à l'aide d'un système de commande interpolé, afin d'affiner encore la simulation du cycle de marche et de la rendre le plus proche possible d'un cycle de marche réel.

Dans un mode de réalisation, le deuxième système d'entraînement est conçu pour piloter de manière indépendante :
- la position de la plateforme selon la direction verticale, et
- la pression exercée par la plateforme sur le pied mécanique articulé lorsque le pied mécanique articulé est en contact avec la surface supérieure de la plateforme.

Selon une possibilité, le deuxième système d'entraînement comporte :
- un système à crémaillère permettant de piloter la position de la plateforme selon la direction verticale, et
- un vérin pneumatique permettant de piloter la pression exercée par la plateforme sur le pied mécanique articulé lorsque le pied mécanique articulé est en contact avec la surface supérieure de la plateforme.

Ce double pilotage de la position verticale de la plateforme et de la pression qu'elle exerce sur le pied mécanique articulé, permet de simuler à la fois la position du sol par rapport au pied et la force avec laquelle le pied rentre en contact avec le sol au cours du cycle de marche.

La simulation de l'intensité de cette force est primordiale car celle-ci conditionne l'usure de la chaussure au niveau de la zone de contact entre celle-ci et le sol, mais également la violence des déformations globalement subies par la chaussure : la combinaison du pilotage du système à crémaillère et du vérin pneumatique permet donc de simuler fidèlement les effets mécaniques de l'impact de la chaussure contre le sol pendant la phase d'appui du cycle de marche.

Selon un mode de réalisation, le deuxième système de déplacement est configuré pour déplacer la plateforme en translation selon la direction verticale, orthogonale à la direction horizontale et à la direction transversale, et en rotation autour d'un axe de pilotage en supination/pronation, l'axe de pilotage en supination/pronation étant orthogonale à la direction transversale.

Selon ces dispositions, le simulateur de marche permet de simuler alternativement une posture de supination ou de pronation du pied en contact avec le sol au cours du cycle de marche.

Selon un mode de réalisation, une longueur de la pièce intermédiaire est réglable. Selon ces dispositions, la longueur du tibia peut être adaptée à l'épaisseur de la semelle de la chaussure testée, sans modifier la trajectoire de la plateforme.

Selon une caractéristique, la plateforme et/ou le pied mécanique articulé comportent des instruments de mesure permettant de mesurer les efforts mécaniques exercés par le pied mécanique articulé sur la plateforme.

Il est également envisageable de placer des instruments de mesure dans la chaussure à tester.

Selon une possibilité, la surface supérieure de la plateforme présente un revêtement amovible et changeable, de manière à simuler la marche sur des surfaces de types différents.

Par exemple, il est possible de faire varier la dureté du sol ou son adhérence.

L'invention concerne également un procédé de simulation de marche au moyen d'un simulateur de marche tel que précédemment décrit, ledit procédé comportant au moins les étapes suivantes :
- obtention d'un ensemble de données expérimentales permettant de décrire la cinématique et dynamique du mouvement d'un pied humain pendant la marche ou la course, et
- pilotage du premier système de déplacement et du deuxième système de déplacement, de manière que la cinématique du mouvement du pied mécanique articulé par rapport à la plateforme soit également décrit par ledit ensemble de données expérimentales.

Selon l'invention, le procédé comporte aussi les étapes indépendantes suivantes :
- pilotage du mouvement de rotation de la manivelle autour de la direction transversale,
- pilotage du mouvement de rotation de la pièce intermédiaire par rapport au chariot autour de la direction transversale,
- pilotage de la position de la plateforme selon la direction verticale, et
- pilotage de la pression exercée par la plateforme sur le pied mécanique articulé lorsque le pied mécanique articulé est en contact avec la surface supérieure de la plateforme.

D'autres caractéristiques et avantages de la présente invention apparaîtront à la lecture de la description détaillée ci-après, de plusieurs exemples de mise en œuvre non limitatifs, faite en référence aux figures annexées dans lesquelles :
[Fig.1] est une vue d'un simulateur de marche selon l'invention,
[Fig.2] est une vue détaillée du pied mécanique articulé,
[Fig.3] est une vue schématique de la configuration initiale d'un cycle de marche,
[Fig.4] est une vue schématique de la phase d'appui d'un cycle de marche,
[Fig.5] est une vue schématique de la phase d'appui d'un cycle de marche,
[Fig.6] est une vue schématique de la phase d'appui d'un cycle de marche,
[Fig.7] est une vue schématique de la phase d'appui d'un cycle de marche,
[Fig.8] est une vue schématique de la phase oscillante d'un cycle de marche,
[Fig.9] est une vue schématique de la phase oscillante d'un cycle de marche,
[Fig.10] est une vue schématique d'une plateforme selon un mode de réalisation du simulateur permettant de simuler une supination au cours d'un cycle de marche,
[Fig.11] est une vue schématique d'une plateforme selon un mode de réalisation du simulateur permettant de simuler une pronation au cours d'un cycle de marche,
[Fig.12] est une vue schématique d'un mode de réalisation d'un tibia réglable

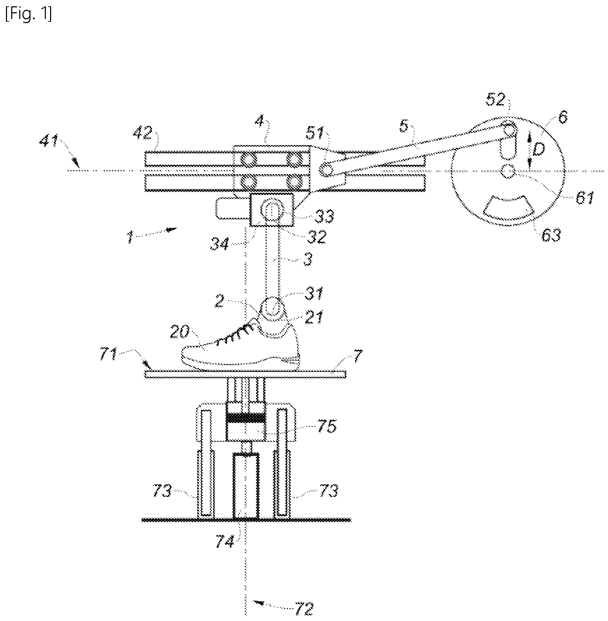

La figure 1 représente un simulateur de marche 1 selon l'invention, pendant la phase d'appui.

Ce simulateur de marche 1 comporte un pied mécanique articulé 2 relié à une première extrémité 31 d'une pièce intermédiaire 3 par une liaison pivot 21 : le pied mécanique articulé 2 peut donc décrire un mouvement de rotation par rapport à la pièce intermédiaire 3 autour d'une direction transversale (non représentée).

Le pied mécanique articulé 2 est par ailleurs chaussé d'une chaussure 20, dont le simulateur de marche 1 permet de simuler l'usure au cours d'un cycle de marche ou de course.

La pièce intermédiaire 3 est par ailleurs fixée, au niveau de sa deuxième extrémité 32 à un chariot 4 par l'intermédiaire d'une liaison pivot 33 : la pièce intermédiaire 3 peut donc décrire, sous l'action d'un motoréducteur 34, un mouvement de rotation par rapport au chariot 4 autour de la direction transversale.

Ce chariot 4 est déplaçable selon la direction horizontale 41, le long de guides 42 présentant une direction longitudinale parallèle à la direction horizontale 41, sous l'action d'un système bielle/manivelle comportant une bielle 5 et une manivelle 6.

La bielle 5 est reliée respectivement au chariot 4 et à la manivelle 6 par les liaison pivot 51 et 52 selon la direction transversale.

La manivelle 6 peut décrire, sous l'action d'un moteur 62 (non représenté), un mouvement de rotation autour de l'axe 61, colinéaire à la direction transversale.

Ce mouvement de rotation de la manivelle 6 entraîne mécaniquement un mouvement de translation du chariot 4 selon la direction horizontale.

La manivelle 6 comporte par ailleurs une masse d'équilibrage 63 permettant de limiter l'intensité des vibrations internes causées par la mise en mouvement de la manivelle 6, de la bielle 5, du chariot 4, et de la pièce intermédiaire 3.

Le simulateur de marche 1 comporte également une plateforme 7 présentant une surface supérieure 71 en contact avec la chaussure 20.

Cette plateforme 7 est déplaçable en translation selon une direction verticale 72 le long de guides 73, sous l'action système à crémaillère 74 et d'un vérin pneumatique 75.

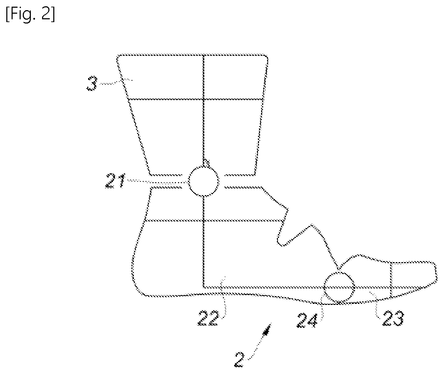

La figure 2 représente la structure détaillée du pied mécanique articulé 2.

Ce pied mécanique articulé 2 comporte un corps central 22 et une partie avant 23, le corps central étant respectivement relié à la pièce intermédiaire 3 par une liaison pivot 21 et à la partie avant par une liaison pivot 24.

Les deux liaisons pivot 21 et 24 permettent des mouvements de rotation relatifs autour de la direction transversale de la pièce intermédiaire 3, du corps central 22 et de la partie avant 23.

On notera que, dans d'autres modes de réalisation non représentés, la liaison pivot 21 et la liaison pivot 24 peuvent être remplacées par des liaisons mécaniques autorisant des mouvements relatifs de la pièce intermédiaire 3, du corps central 22 et de la partie avant 23 comportant davantage de degrés de liberté : de telles liaisons rendant le pied mécanique articulé 2 plus proche de l'anatomie d'un pied humain réel, celles-ci permettent de simuler un cycle de marche ou de course plus proche d'un cycle de marche ou de course réel.

Par exemple, la liaison pivot 21 et la liaison pivot 24 peuvent être remplacées par des liaisons de type rotule.

Les différents éléments du simulateur de marche 1 représentent ainsi chacun un élément de l'anatomie d'un pied et d'une jambe humaine, et leurs mouvements relatifs permettent de simuler un cycle de marche ou de course complet.

En particulier, le pied mécanique articulé 2 représente un pied humain, la liaison pivot 33 représente un genou, la pièce intermédiaire 3 représente un tibia, la liaison pivot 21 représente l'articulation d'une cheville, la liaison pivot 24 représente l'articulation métatarso-phalangienne d'un pied, et la plateforme 7 représente un sol, sur lequel le pied est amené à se poser.

La simulation d'un cycle de marche ou de course peut ainsi être piloté par la commande coordonnée du moteur 62, du motoréducteur 34, du système à crémaillère 74 et du vérin pneumatique 75.

Le pilotage de ces quatre éléments, associé aux deux articulations passives représentées par les liaisons pivot 21 et 24, permet de reproduire fidèlement un cycle de marche ou de course humain : le mouvement du pied mécanique articulé 2 (ou de la chaussure 20) par rapport à la plateforme 7 présente une cinématique identique au mouvement d'un pied humain par rapport au sol pendant un cycle de marche ou de course.

Il est à noter que bien que ce système à crémaillère 74 et ce vérin pneumatique 75 servent tous deux à déplacer la plateforme 7 selon la direction verticale 72, ils ont chacun un rôle distinct :
- le système à crémaillère 74 permet de piloter la position de la plateforme 7 selon la direction verticale 72, simulant ainsi la position du sol par rapport au pied, et
- le vérin pneumatique 75 permet de commander la pression exercée par la plateforme 7 sur la chaussure 20 lorsque celles-ci sont en contact l'une avec l'autre, simulant ainsi la force d'impact du pied contre le sol lors de la phase d'appui.

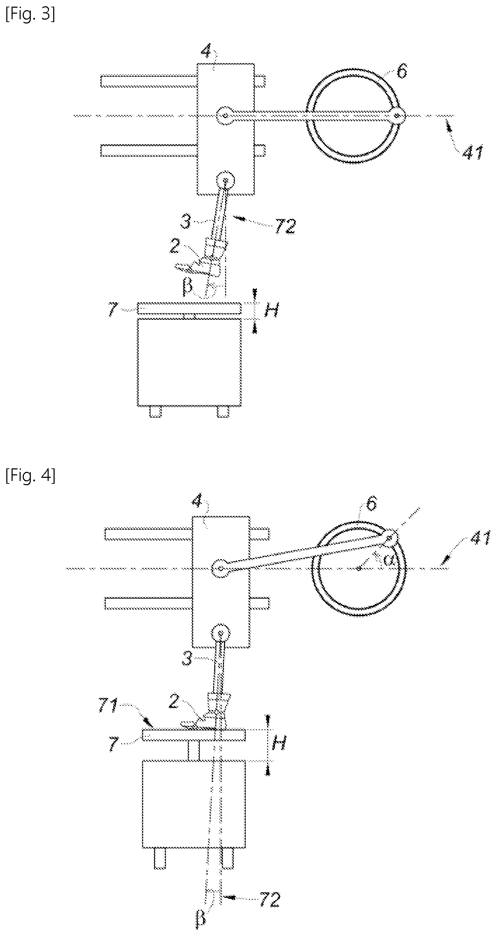

Les figures 3 à 9 suivantes illustrent les différentes phases successives d'un exemple cycle de marche simulé grâce au simulateur de marche 1.

Comme précédemment décrit, le passage d'une de ces phases à la suivante est effectué par le pilotage des quatre paramètres suivants :
- l'angle α, repérant la position de la liaison pivot 52 par rapport à la direction horizontale 41 et caractérisant le mouvement de rotation de la manivelle 6 autour de la direction transversale,
- l'angle β, caractérisant l'inclinaison de la pièce intermédiaire 3 par rapport à la direction verticale 72,
- la hauteur H de la plateforme 7, et
- la pression P du vérin pneumatique 75.

Les valeurs numériques présentées par la suite pour ces quatre paramètres ne sont ici données qu'à titre d'exemple non limitatif.

La figure 3 représente la position initiale du cycle de marche.

Sur cette figure 3, α = 0°, β = -10°, H = 40 mm, et P = 0 mbar.

Dans cette position initiale, le pied mécanique articulé 2 n'est pas en contact avec la surface supérieure 71 de la plateforme 7 et suit donc un mouvement résultant de la combinaison d'une translation selon la direction horizontale 41 (déplacement du chariot 4) et de rotation autour de la direction transversale (rotation de la pièce intermédiaire 3 par rapport au chariot 4).

La figure 4 représente le début de la phase d'appui.

Sur cette figure 4, α = 45°, β = -2°, H = 110 mm, et P = 1500 mbar.

Ici, le pied mécanique articulé 2 est en contact « à plat » avec la surface supérieure 71 de la plateforme 7 : le corps central 22 et la partie avant 23 sont simultanément en appui sur la surface supérieure 71.

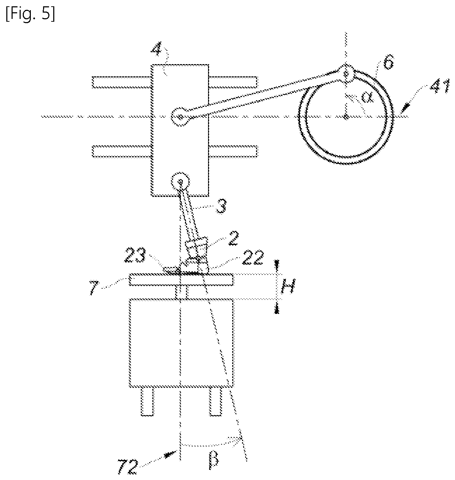

Les figures 5 à 7 suivantes illustrent également la phase d'appui, durant laquelle le pied mécanique articulé 2 est en contact avec la plateforme 7.

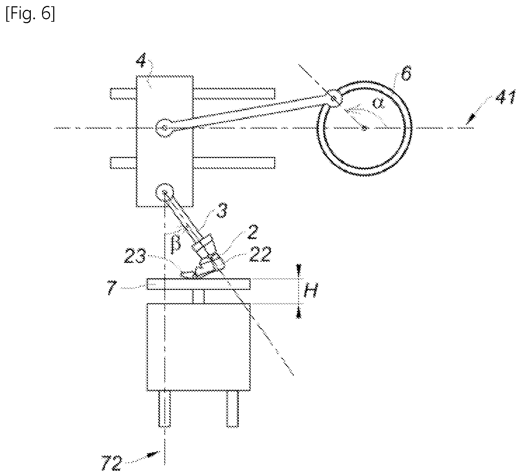

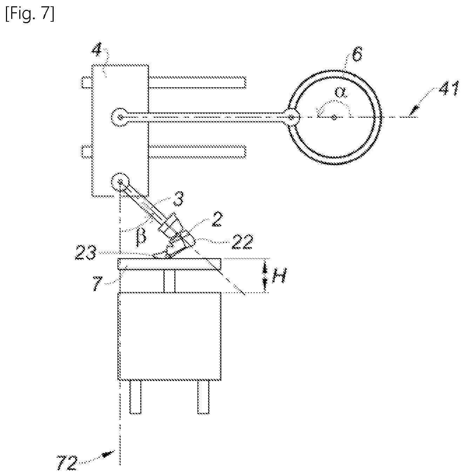

Sur ces différentes figures :
- α = 90°, β = 13°, H = 150 mm, et P = 1500 mbar (figure 5),
- α = 135°, β = 37°, H = 170 mm, et P = 1500 mbar (figure 6),
- α = 180°, β = 60°, H = 180 mm, et P = 1500 mbar (figure 7),

Au cours de cette phase d'appui, le pied mécanique articulé 2 reste en contact avec la plateforme 7 et les mesures des angles α et β augmentent : cela traduit le déplacement du tibia (pièce intermédiaire 3) et du genou (liaison pivot 33) par rapport à un pied (pied mécanique articulé 2) stationnaire sur le sol (plateforme 7).

On remarquera que ce déplacement, associé à l'élévation de la plateforme 7, a pour conséquence de déformer le pied mécanique articulé 2 et d'entraîner sa rotation par rapport à la pièce intermédiaire 3.

De plus, ce déplacement modifie le contact entre le pied mécanique articulé 2 et la plateforme 7.

En effet, sur la figure 5, le corps central 22 et la partie avant 23 sont simultanément en appui sur la surface supérieure 71, alors que sur les figures 6 et 7, seule la partie avant 23 est encore en contact : cela traduit l'élévation du talon et le transfert de l'appui vers l'avant du pied (partie centrale 23).

Durant l'intégralité de cette phase d'appui, la pression P du vérin pneumatique 75 présente une valeur élevée, reproduisant l'intensité de la force de contact entre le pied (pied mécanique articulé 2) et le sol (plateforme 7) pendant cette phase d'appui.

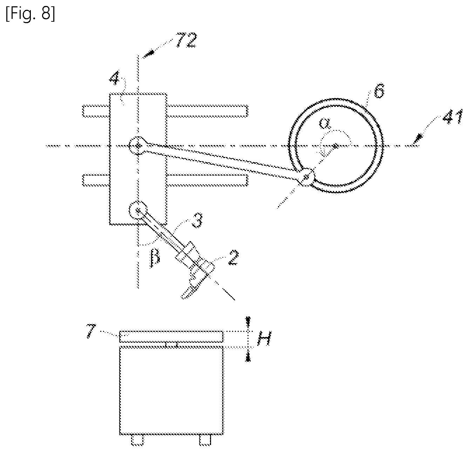

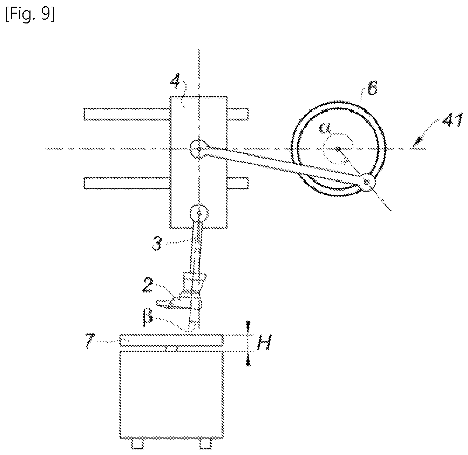

Les figures 8 et 9 suivantes illustrent la phase oscillante du cycle de marche, durant laquelle le pied mécanique articulé 2 n'est plus en contact avec la plateforme 7.

Sur ces figures:
- α = 225°, β = 60°, H = 40 mm, et P = 0 mbar (figure 8),
- α = 315°, β = -6°, H = 40 mm, et P = 0 mbar (figure 9).

Au cours de cette phase oscillante, la mesure de l'angles α continue d'augmenter alors que celle de l'angle β diminue : cela traduit un mouvement du genou (liaison pivot 33) et du tibia (pièce intermédiaire 3) en vue d'un repositionnement dans la configuration initiale représentée par la figure 3 et le début d'un nouveau cycle de marche.

La valeur de la pression P reste par ailleurs nulle car il n'y a ici aucun contact entre le pied (pied mécanique articulé 2) et le sol (plateforme 7).

Le pilotage coordonné des paramètres α, β, H et P (respectivement grâce au moteur 62, au motoréducteur 34, au système à crémaillère 74 et au vérin pneumatique 75) permet donc bien de simuler avec précision un cycle de marche humain.

Par ailleurs, en faisant varier les valeurs de ces paramètres les unes par rapport aux autres, il est possible de modifier le cycle de marche simulé et d'ainsi tester l'usure de chaussures dans des conditions différentes.

Par exemple, en augmentant la vitesse de variation de l'angle α, il est possible de simuler un cycle de marche plus rapide.

De même, en augmentant la valeur de la pression P, il est possible de simuler un cycle de marche présentant une force d'impact au sol plus importante.

Enfin, il est possible d'ajuster la distance D entre la liaison pivot 52 par rapport à l'axe 61 autour duquel la manivelle 6 est en rotation : diminuer la distance D provoque la diminution de l'amplitude du mouvement du chariot 4 selon la direction horizontale 41 et permet ainsi de simuler un cycle de marche de plus faible enjambée.

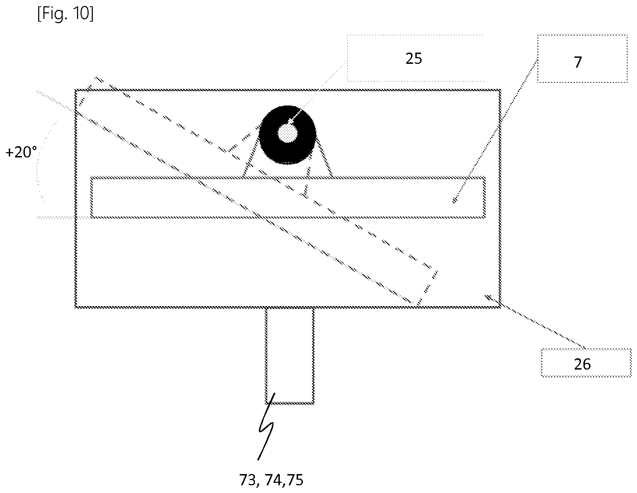

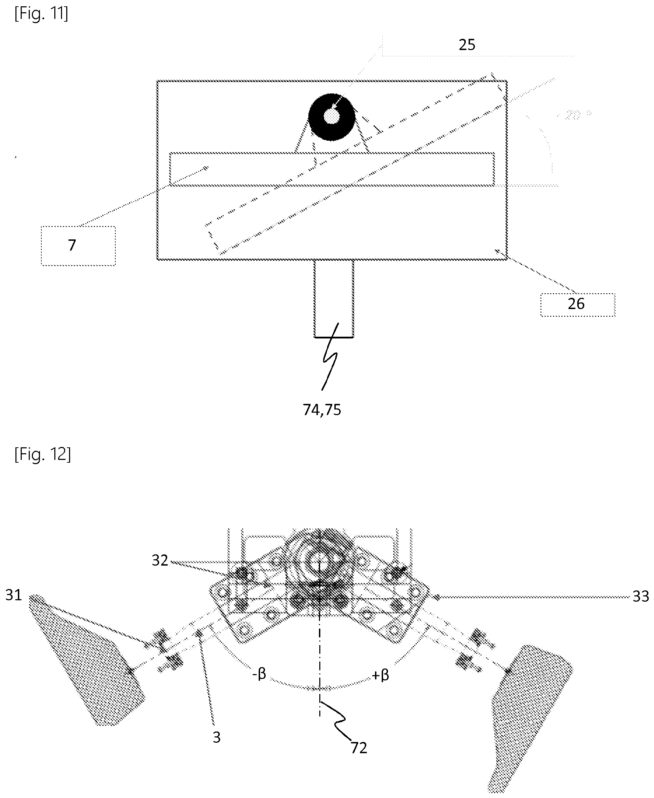

Selon un mode de réalisation illustré aux figures 10 et 11, la plateforme 7 du simulateur de marche est reliée à un support 26, le support 26 étant actionné en translation selon la direction verticale 72 le long des guides 73, sous l'action du système à crémaillère 74 et du vérin pneumatique 75 ; la liaison entre la plateforme 7 et le support 26 est un axe de pilotage en supination/pronation 25, ledit axe de pilotage en supination/pronation 25 ayant une direction transverse à un plan vertical du support 26, et transverse aux axes des liaisons pivots 33, 21, et 24 illustrés sur les figures 1 et 2 ; la plateforme 7 est mobile en rotation autour de l'axe de pilotage en supination/pronation 25, et actionnée en rotation autour de cet axe par un moteur de pilotage en supination/pronation, entre deux positions angulaires extrêmes de part et d'autre d'une position médiane correspondante à la position horizontale de la plateforme 7. La plateforme 7 est ainsi à la fois entraînée par le déplacement en translation du support 26, sous l'action du système à crémaillère 74 et du vérin pneumatique 75, et en rotation autour de l'axe de pilotage en supination/pronation 25, de manière à simuler une démarche selon une alternance de postures de supination et de pronation. Ainsi, par exemple, la simulation d'une posture de supination peut être obtenue avec une inclinaison de la plateforme 7 de + 20° au-dessus de la position médiane horizontale vers un côté de la machine, transversalement au sens de la marche simulée, comme cela est représenté en pointillé sur la figure 10, et, alternativement, la simulation d'une posture de pronation peut être obtenue avec une inclinaison de la plateforme 7 de -20° au-dessous de la position médiane horizontale vers le côté opposé de la machine, transversalement au sens de la marche simulée, comme cela est représenté en pointillé sur la figure 11.

En outre, et de manière complémentaire, la pièce intermédiaire 3 peut avoir une longueur réglable, comme cela est illustré sur la figure 12; pour cela, par exemple, la pièce intermédiaire 3 peut comprendre une pièce de réglage 33 au niveau de sa deuxième extrémité 32, ladite pièce de réglage étant configurée pour permettre de rentrer ou sortir plus ou moins la deuxième extrémité 32 de la pièce intermédiaire 3.

## Revendications

1. Simulateur de marche (1), comportant :
- un pied mécanique articulé (2),
- un premier système de déplacement adapté pour déplacer ledit pied mécanique articulé (2) selon un mouvement combinant un mouvement de translation selon une direction horizontale (41) et un mouvement de rotation autour d'une direction transversale, orthogonale à ladite direction horizontale (41),
- une plateforme (7) présentant une surface supérieure (71) adaptée pour rentrer en contact avec le pied mécanique articulé (2),
- un deuxième système de déplacement, adapté pour déplacer ladite plateforme (7) en translation selon une direction verticale (72), orthogonale à la direction horizontale (41) et à la direction transversale,
le premier système de déplacement et le deuxième système de déplacement étant conçus pour être pilotés de manière indépendante ou interpolée, de sorte que le mouvement du pied mécanique articulé (2) par rapport à la plateforme (7) soit similaire à celui d'un pied humain par rapport au sol pendant un cycle de marche ou de course, dans lequel le premier système de déplacement comporte une pièce intermédiaire (3) présentant :
- une première extrémité (31) fixée au pied mécanique articulé (2) et
- une deuxième extrémité (32) fixée à un chariot (4), déplaçable selon la direction horizontale (41), par l'intermédiaire d'une liaison pivot (33) selon la direction transversale,
dans lequel le premier système de déplacement comporte un système bielle/manivelle (5,6) conçu pour déplacer le chariot (4) selon la direction horizontale (41), la manivelle (6) étant déplaçable en rotation autour de la direction transversale,
dans lequel le premier système de déplacement comporte :
- un motoréducteur (34) conçu pour entraîner la pièce intermédiaire (3) dans un mouvement de rotation autour de la direction transversale, et
- un moteur (62) conçu pour entraîner la manivelle (6) dans un mouvement de rotation autour de la direction transversale,
ce moteur (62) et ce motoréducteur (34) pouvant être pilotés indépendamment l'un de l'autre.

2. Simulateur de marche (1) selon la revendication 1, dans lequel la manivelle (6) comporte une ou plusieurs masses d'équilibrage (63) permettant d'atténuer les vibrations mécaniques induites par la mise en mouvement de celle-ci.

3. Simulateur de marche (1) selon selon la revendication 2, dans lequel la bielle (5) est fixée sur la manivelle à une distance (D) ajustable de l'axe (61) de rotation de cette dernière.

4. Simulateur de marche (1) selon l'une quelconque des revendications précédentes, dans lequel le pied mécanique articulé (2) comporte un corps central (22) fixé à la première extrémité (31) de la pièce intermédiaire (3) par l'intermédiaire d'une liaison mécanique (21) autorisant un mouvement de rotation, autour de la direction transversale, dudit corps central (22) par rapport à ladite première extrémité (31), de manière à simuler l'articulation d'une cheville d'un pied humain.

5. Simulateur de marche (1) selon la revendication précédente, dans lequel le pied mécanique articulé (2) comporte une partie avant (23) fixée au corps central (22) par l'intermédiaire d'une liaison mécanique (24) autorisant un mouvement de rotation, autour de la direction transversale, de ladite partie avant (23) par rapport audit corps central (22), de manière à simuler les articulations métatarso-phalangiennes d'un pied humain.

6. Simulateur de marche (1) selon l'une quelconque des revendications précédentes, dans lequel le deuxième système d'entraînement est conçu pour piloter de manière indépendante :
- la position de la plateforme (7) selon la direction verticale (72), et
- la pression exercée par la plateforme (7) sur le pied mécanique articulé (2) lorsque le pied mécanique articulé (2) est en contact avec la surface supérieure (71) de la plateforme (7).

7. Simulateur de marche (1) selon la revendication précédente, dans lequel le deuxième système d'entraînement comporte :
- un système à crémaillère (74) permettant de piloter la position de la plateforme (7) selon la direction verticale (72), et
- un vérin pneumatique (75) permettant de piloter la pression exercée par la plateforme (7) sur le pied mécanique articulé (2) lorsque le pied mécanique articulé (2) est en contact avec la surface supérieure (71) de la plateforme (7).

8. Simulateur de marche (1) selon l'une quelconque des revendications précédentes, dans lequel le deuxième système d'entraînement est configuré pour déplacer la plateforme (7) en rotation autour d'un axe (25) de pilotage en supination/pronation, l'axe (25) de pilotage en supination/pronation étant orthogonale à la direction transversale.

9. Simulateur de marche (1) selon l'une quelconque des revendications précédentes, dans lequel la plateforme (7) et/ou le pied mécanique articulé (2) comportent des instruments de mesure permettant de mesurer les efforts mécaniques exercés par le pied mécanique articulé (2) sur la plateforme (7).

10. Simulateur de marche (1) selon l'une quelconque des revendications précédentes, dans lequel la surface supérieure (71) de la plateforme (7) présente un revêtement amovible et changeable, de manière à simuler la marche sur des surfaces de types différents.

11. Procédé de simulation de marche au moyen d'un simulateur de marche (1) conforme à l'une quelconque des revendications précédentes, ledit procédé comportant au moins les étapes suivantes :
- obtention d'un ensemble de données expérimentales permettant de décrire la cinématique du mouvement d'un pied humain pendant la marche ou la course, et
- pilotage du premier système de déplacement et du deuxième système de déplacement, de manière que la cinématique du mouvement du pied mécanique articulé (2) par rapport à la plateforme (7) soit également décrite par ledit ensemble de données expérimentales,
dans lequel le simulateur de marche (1) est conforme aux revendications 1 à 10, ledit procédé comportant les étapes indépendantes suivantes :
- pilotage du mouvement de rotation de la manivelle (6) autour de la direction transversale,
- pilotage du mouvement de rotation de la pièce intermédiaire (3) par rapport au chariot (4) autour de la direction transversale,
- pilotage de la position de la plateforme (7) selon la direction verticale (72), et
- pilotage de la pression exercée par la plateforme (7) sur le pied mécanique articulé (2) lorsque le pied mécanique articulé (2) est en contact avec la surface supérieure (71) de la plateforme (7).

## Patentansprüche

1. Gehsimulator (1), der Folgendes aufweist:
- einen gelenkigen mechanischen Fuß (2),
- ein erstes Verschiebesystem, das geeignet ist, den gelenkigen mechanischen Fuß (2) in einer Bewegung zu verschieben, wobei eine Verschiebebewegung in einer horizontalen Richtung (41) und eine Drehbewegung um eine Querrichtung, orthogonal zur horizontalen Richtung (41), kombiniert werden,
- eine Plattform (7), die eine obere Oberfläche (71) aufweist, die geeignet ist, mit dem gelenkigen mechanischen Fuß (2) in Kontakt zu kommen,
- ein zweites Verschiebesystem, das geeignet ist, die Plattform (7) in Translation in einer vertikalen Richtung (72), orthogonal zur horizontalen Richtung (41) und zur Querrichtung, zu verschieben,
wobei das erste Verschiebesystem und das zweite Verschiebesystem so ausgelegt sind, dass sie unabhängig oder interpoliert gesteuert werden, so dass die Bewegung des gelenkigen mechanischen Fußes (2) in Bezug auf die Plattform (7) der eines menschlichen Fußes in Bezug auf den Boden während eines Geh- oder Laufzyklus ähnelt, wobei das erste Verschiebesystem ein Zwischenstück (3) mit Folgendem aufweist:
- einem ersten Ende (31), das am gelenkigen mechanischen Fuß (2) befestigt ist, und
- einem zweiten Ende (32), das über eine Drehverbindung (33) in Querrichtung an einem Schlitten (4) befestigt ist, der in horizontaler Richtung (41) verschiebbar ist,
wobei das erste Verschiebesystem ein Pleuel-/Kurbelsystem (5,6) aufweist, das zum Verschieben des Schlittens (4) in horizontaler Richtung (41) ausgelegt ist, wobei die Kurbel (6) um die Querrichtung drehbar beweglich ist,
wobei das erste Verschiebesystem Folgendes aufweist:
- einen Getriebemotor (34), der zum Antrieb des Zwischenstücks (3) in einer Drehbewegung um die Querrichtung ausgelegt ist, und
- einen Motor (62), der zum Antrieb der Kurbel (6) in einer Drehbewegung um die Querrichtung ausgelegt ist,
wobei dieser Motor (62) und dieser Getriebemotor (34) unabhängig voneinander gesteuert werden können.

2. Gehsimulator (1) nach Anspruch 1, wobei die Kurbel (6) ein oder mehrere Auswuchtgewichte (63) aufweist, die es ermöglichen, die durch die Bewegung der Kurbel induzierten mechanischen Schwingungen zu dämpfen.

3. Gehsimulator (1) nach Anspruch 2, wobei die Pleuelstange (5) in einem einstellbaren Abstand (D) von der Drehachse (61) der Kurbel an der Kurbel befestigt ist.

4. Gehsimulator (1) nach einem der vorhergehenden Ansprüche, wobei der gelenkige mechanische Fuß (2) einen zentralen Körper (22) aufweist, der an dem ersten Ende (31) des Zwischenstücks (3) über eine mechanische Verbindung (21) befestigt ist, die eine Drehbewegung um die Querrichtung des zentralen Körpers (22) in Bezug auf das erste Ende (31) zulässt, um das Gelenk eines Knöchels eines menschlichen Fußes zu simulieren.

5. Gehsimulator (1) nach dem vorhergehenden Anspruch, wobei der gelenkige mechanische Fuß (2) einen vorderen Teil (23) aufweist, der über eine mechanische Verbindung (24) am zentralen Körper (22) befestigt ist, die eine Drehbewegung um die Querrichtung des vorderen Teils (23) in Bezug auf den zentralen Körper (22) zulässt, um die Metatarsophalangealgelenke eines menschlichen Fußes zu simulieren.

6. Gehsimulator (1) nach einem der vorhergehenden Ansprüche, wobei das zweite Antriebssystem dazu ausgelegt ist, Folgendes unabhängig voneinander zu steuern:
- die Position der Plattform (7) in vertikaler Richtung (72), und
- der von der Plattform (7) auf den gelenkigen mechanischen Fuß (2) ausgeübte Druck, wenn der gelenkige mechanische Fuß (2) mit der oberen Oberfläche (71) der Plattform (7) in Kontakt ist.

7. Gehsimulator (1) nach dem vorhergehenden Anspruch, wobei das zweite Antriebssystem Folgendes aufweist:
- ein Zahnstangensystem (74), die es ermöglicht, die Position der Plattform (7) in der vertikalen Richtung (72) zu steuern, und
- einen Pneumatikzylinder (75), der es ermöglicht, den von der Plattform (7) auf den gelenkigen mechanischen Fuß (2) ausgeübte Druck zu steuern, wenn der gelenkige mechanische Fuß (2) mit der oberen Oberfläche (71) der Plattform (7) in Kontakt ist.

8. Gehsimulator (1) nach einem der vorhergehenden Ansprüche, wobei das zweite Antriebssystem so eingerichtet ist, dass es die Plattform (7) in Drehung um eine Achse (25) für die Steuerung in Supination/Pronation verschiebt, wobei die Achse (25) für die Steuerung in Supination/Pronation orthogonal zur Querrichtung verläuft.

9. Gehsimulator (1) nach einem der vorhergehenden Ansprüche, wobei die Plattform (7) und/oder der gelenkige mechanische Fuß (2) Messinstrumente aufweisen, die es ermöglichen, die mechanischen Kräfte zu messen, die vom gelenkigen mechanischen Fuß (2) auf die Plattform (7) ausgeübt werden.

10. Gehsimulator (1) nach einem der vorhergehenden Ansprüche, wobei die obere Oberfläche (71) der Plattform (7) eine abnehmbare und wechselbare Beschichtung besitzt, um das Gehen auf Oberflächen unterschiedlicher Art zu simulieren.

11. Verfahren zur Gehsimulation mit Hilfe eines Gehsimulators (1) nach einem der vorhergehenden Ansprüche, wobei das Verfahren mindestens die folgenden Schritte aufweist:
- Erhalt eines experimentellen Datensatzes, der es ermöglicht, die Kinematik der Bewegung eines menschlichen Fußes während des Gehens oder Laufens zu beschreiben, und
- Steuerung des ersten Verschiebesystems und des zweiten Verschiebesystems, so dass die Bewegungskinematik des gelenkigen mechanischen Fußes (2) in Bezug auf die Plattform (7) auch durch den experimentellen Datensatz beschrieben wird,
wobei der Gehsimulator (1) den Ansprüchen 1 bis 10 entspricht, wobei das Verfahren die folgenden unabhängigen Schritte aufweist:
- Steuerung der Drehbewegung der Kurbel (6) um die Querrichtung,
- Steuerung der Drehbewegung des Zwischenstücks (3) in Bezug auf den Schlitten (4) um die Querrichtung,
- Steuerung der Position der Plattform (7) in der vertikalen Richtung (72), und
- Steuerung des von der Plattform (7) auf den gelenkigen mechanischen Fuß (2) ausgeübten Drucks, wenn der gelenkige mechanische Fuß (2) mit der oberen Oberfläche (71) der Plattform (7) in Kontakt ist.

## Claims

1. A walking simulator (1), including:
- an articulated mechanical foot (2),
- a first displacement system adapted to move said articulated mechanical foot (2) in a movement combining a translational movement in a horizontal direction (41) and a rotational movement about a transverse direction, orthogonal to said horizontal direction (41),
- a platform (7) having an upper surface (71) adapted to come into contact with the articulated mechanical foot (2),
- a second displacement system, adapted to move said platform (7) in translation in a vertical direction (72), orthogonal to the horizontal direction (41) and to the transverse direction,
the first displacement system and the second displacement system being designed to be controlled in an independent or interpolated manner, so that the movement of the articulated mechanical foot (2) relative to the platform (7) is similar to that of a human foot relative to the ground during a walking or running cycle, wherein the first displacement system includes an intermediate part (3) having:
- a first end (31) fastened to the articulated mechanical foot (2) and
- a second end (32) fastened to a carriage (4), movable in the horizontal direction (41), via a pivot connection (33) in the transverse direction,
wherein the first displacement system includes a connecting rod/crank system (5, 6) designed to move the carriage (4) in the horizontal direction (41), the crank (6) being movable in rotation about the transverse direction,
wherein the first displacement system includes:
- a gear motor (34) designed to drive the intermediate part (3) in a rotational movement about the transverse direction, and
- a motor (62) designed to drive the crank (6) in a rotational movement about the transverse direction,
this motor (62) and this gear motor (34) being able to be controlled independently of each other.

2. The walking simulator (1) according to claim 1, wherein the crank (6) includes one or several balance weights (63) making it possible to attenuate the mechanical vibrations induced by the movement thereof.

3. The walking simulator (1) according to claim 2, wherein the connecting rod (5) is fastened to the crank at an adjustable distance (D) from the axis (61) of rotation of the latter.

4. The walking simulator (1) according to any one of the preceding claims, wherein the articulated mechanical foot (2) includes a central body (22) fastened to the first end (31) of the intermediate part (3) via a mechanical connection (21) allowing a rotational movement, about the transverse direction, of said central body (22) relative to said first end (31), so as to simulate the ankle joint of a human foot.

5. The walking simulator (1) according to the preceding claim, wherein the articulated mechanical foot (2) includes a front portion (23) fastened to the central body (22) via a mechanical connection (24) allowing a rotational movement, about the transverse direction, of said front portion (23) relative to said central body (22), so as to simulate the metatarsophalangeal joints of a human foot.

6. The walking simulator (1) according to any one of the preceding claims, wherein the second drive system is designed to independently control:
- the position of the platform (7) in the vertical direction (72), and
- the pressure exerted by the platform (7) on the articulated mechanical foot (2) when the articulated mechanical foot (2) is in contact with the upper surface (71) of the platform (7).

7. The walking simulator (1) according to the preceding claim, wherein the second drive system includes:
- a rack and pinion system (74) making it possible to control the position of the platform (7) in the vertical direction (72), and
- a pneumatic cylinder (75) making it possible to control the pressure exerted by the platform (7) on the articulated mechanical foot (2) when the articulated mechanical foot (2) is in contact with the upper surface (71) of the platform (7).

8. The walking simulator (1) according to any one of the preceding claims, wherein the second drive system is configured to move the platform (7) in rotation about a supination/pronation control axis (25), the supination/pronation control axis (25) being orthogonal to the transverse direction,

9. The walking simulator (1) according to any one of the preceding claims, wherein the platform (7) and/or the articulated mechanical foot (2) include measuring instruments making it possible to measure the mechanical forces exerted by the articulated mechanical foot (2) on the platform (7).

10. The walking simulator (1) according to any one of the preceding claims, wherein the upper surface (71) of the platform (7) has a removable and changeable coating, so as to simulate walking on different types of surfaces.

11. A method for simulating walking by means of a walking simulator (1) according to any one of the preceding claims, said method including at least the following steps:
- obtaining a set of experimental data making it possible to describe the kinematics of the movement of a human foot during walking or running, and
- controlling the first displacement system and the second displacement system, such that the kinematics of the movement of the articulated mechanical foot (2) relative to the platform (7) is also described by said set of experimental data,
wherein the walking simulator (1) is according to claims 1 to 10, said method including the following independent steps:
- controlling the rotational movement of the crank (6) about the transverse direction,
- controlling the rotational movement of the intermediate part (3) relative to the carriage (4) about the transverse direction,
- controlling the position of the platform (7) in the vertical direction (72), and
- controlling the pressure exerted by the platform (7) on the articulated mechanical foot (2) when the articulated mechanical foot (2) is in contact with the upper surface (71) of the platform (7).
